# FASCICULE DE BREVET EUROPEEN

(11) **EP 0 915 222 B1**
(45) Date de publication et mention de la délivrance du brevet: **16.04.2003**
(21) Numéro de dépôt: 98402410.9
(22) Date de dépôt: 01.10.1998
(51) Int. Cl.: E05B 73/00

(54) **Collier antivol pour bouteille**
Diebstahlsicherungsband für Flaschen
Anti-theft collar for bottles

(30) Priorité: 07.10.1997 FR 9712485
(43) Date de publication de la demande: 12.05.1999
(73) Titulaire: S.I.M. Société Industrielle de Montoire/Loir, 36210 Chabris (FR)
(72) Inventeur: Poussard, Jean-Claude, 41200 Romorantin (FR)
(74) Mandataire: Debay, Yves

(56) Documents cités:
- FR-A- 2 608 285
- FR-A- 2 704 592
- GB-A- 2 264 921

## Description

La présente invention concerne un collier antivol pour bouteille. L'invention concerne plus particulièrement un collier destiné à être fixé autour du col d'une bouteille pour constituer le support d'un dispositif détectable à distance et susceptible de déclencher une alarme dans le cas où la bouteille est volée.

Pour enrayer le vol de bouteilles dans les magasins (grandes surfaces hypermarchés), il est connu de coller sur ces dernières des étiquettes magnétiques désactivables qui permettent de détecter le passage de la bouteille dans un champ de détection.

Cependant, ce système antivol se révèle souvent inefficace car les étiquettes antivol peuvent être arrachées facilement. De plus, la fixation d'une plaque magnétique antivol sur la bouteille est inadaptée.

Il est également connu d'insérer dans le bouchon ou la capsule des inserts détectables, par exemple, magnétiquement. Cette solution nécessite la prise en compte de la protection contre la fraude dès la phase de production. Or, tous les producteurs de bouteilles ne sont pas équipés et ne voient pas forcément l'intérêt de s'équiper car ils ne savent pas toujours à l'avance si toute la production va être achetée par des grandes surfaces.

Il est connu par le document FR 2 704 592 un dispositif de protection contre le vol à l'étalage, destiné à la protection de bouteilles. Le dispositif comprend un boîtier et un tiroir support en matière plastique, qui s'emboîtent l'un dans l'autre. Des organes de détection susceptibles de coopérer avec une installation de détection sont insérés dans le support tiroir. Deux branches recourbées l'une vers l'autre sont articulées chacune sur un téton compris dans le tiroir support. Elles sont chacune munies d'une denture leur permettant de s'engrener l'une dans l'autre pour tourner simultanément. Un système est prévu pour empêcher le dispositif de se fermer lorsqu'il n'est pas utilisé. Des moyens de verrouillage amovibles sont insérés sur le dispositif pour maintenir les branches en position fermée. Le dispositif est déverrouillé grâce à un puissant aimant. Un inconvénient de ce dispositif est qu'il ne s'adapte pas à des cols de bouteilles de diamètres différents. Un autre inconvénient de ce dispositif est sa relative complexité du fait de l'imbrication de plusieurs pièces.

Un but de l'invention est de proposer un collier antivol pour bouteille d'une grande solidité, s'adaptant à des cols de bouteilles de diamètres différents et palliant les inconvénients de l'art antérieur.

Ce but est atteint par le fait que le collier antivol pour bouteille est constitué de deux demi-bagues articulées comportant des moyens complémentaires de verrouillage amovibles pour assurer le blocage du collier autour du col d'une bouteille, l'une au moins des demi-bagues comportant des moyens de fixation d'un dispositif détectable susceptible de déclencher une alarme à distance, la surface intérieure de chacune des demi-bagues comportant une pluralité d'ailettes destinées à venir en contact et se déformer sur le col de la bouteille lors de la fermeture du collier, les ailettes étant déformables de façon à permettre l'adaptation du collier à des diamètres de cols de bouteilles différents.

Selon une autre particularité, chacune des ailettes est constituée de deux portions planes reliées au corps de la demi-bague au niveau de l'un de leurs bords de façon à constituer un dièdre, les deux faces du dièdre constitué par l'ailette étant disposées sensiblement symétriquement par rapport au plan du collier antivol de façon à former un angle sensiblement droit, les deux faces du dièdre s'écartant l'une de l'autre par élasticité lors de la déformation de l'ailette sur le col de la bouteille.

Selon une autre particularité, les ailettes sont disposées de façon à ne présenter aucun jour aux extrémités de jonction des deux demi-bagues, entre les deux ailettes adjacentes appartenant respectivement aux deux demi-bagues.

Selon une autre particularité, le corps de chaque demi-bague a, en coupe transversale, sensiblement la forme d'un H.

Selon une autre particularité, l'une des demi-bagues comporte une paroi sensiblement plane tangente au corps de la demi-bague et sensiblement parallèle à l'axe de symétrie du collier, la demi-bague comportant au moins une nervure de renforcement formée entre la paroi plane et le corps de la demi-bague, l'extrémité supérieure de la paroi plane faisant saillie au-dessus du bord supérieur du collier pour constituer une première surface située en vis-à-vis du col de la bouteille et formant un support pour une première étiquette adhésive telle qu'une étiquette magnétique détectable à distance, le collier étant conformé de façon à ne laisser qu'un faible espace entre la première surface et le col de la bouteille, pour empêcher le décollement de l'étiquette magnétique, la seconde surface de la paroi plane, orientée vers l'extérieur du collier, constituant une surface support pour une seconde étiquette adhésive telle qu'une étiquette informative.

Selon une autre particularité, l'extrémité inférieure de la paroi plane fait saillie au-dessous du bord inférieur du collier et comporte des moyens d'attache d'un dispositif détectable susceptible de déclencher une alarme à distance, le collier comportant au moins une nervure de renforcement formée entre la portion inférieure de la paroi plane et le corps de la demi-bague.

Selon une autre particularité, l'extrémité libre d'une première des demi-bagues a sensiblement la forme d'un L dont le pied est orienté sensiblement vers l'extérieur du collier et constitue une languette rigide, l'extrémité libre de la seconde demi-bague comportant une portion rectiligne et une languette rigide formant, avec la portion rectiligne, un angle en L destiné à venir épouser le coude du L formé à l'extrémité de la première demi-bague lors de la fermeture du collier, les extrémités des demi-bagues étant conformées de façon que les languettes des deux demi-bagues soient superposées dans la position fermée du collier, les languettes des demi-bagues comportant les moyens complémentaires de verrouillage amovibles pour assurer le blocage du collier autour du col de la bouteille.

Selon une autre particularité, la languette rigide de la seconde demi-bague est décalée par rapport au plan de joint avec le corps de la demi-bague, c'est-à-dire que la languette rigide est située dans le prolongement d'une corde de l'arc de cercle formé par la demi-bague.

Selon une autre particularité, les moyens complémentaires de verrouillage amovibles assurant la fermeture du collier autour du col de la bouteille sont constitués d'un dispositif du type bouton de sécurité ou "bubble" formé par un clou introduit dans un premier logement situé sur la languette d'une première demi-bague et dont la pointe coopère avec un bouton de réception creux situé dans un logement de la languette de la seconde demi-bague, le bouton de réception comportant une paroi percée d'un trou pour recevoir la pointe du clou et des moyens de blocage amovibles de l'extraction du clou lorsque ce dernier a été introduit dans le trou.

Selon une autre particularité, les deux demi-bagues formant le collier sont constituées de matière plastique moulée telle que du polypropylène chargé en polyéthylène.

Selon une autre particularité, les deux demi-bagues sont articulées au niveau de l'une de leurs extrémités autour d'un axe constitué par un rivet bouterollé.

D'autres particularités et avantages de la présente invention apparaîtront plus clairement à la lecture de la description ci-après faite en référence aux dessins annexés dans lesquels :
- la figure 1 représente une vue de dessus et en position légèrement ouverte du collier antivol pour bouteille selon l'invention,
- la figure 2A représente une vue de côté et de l'intérieur d'une première demi-bague constituant le collier de la figure 1,
- la figure 2B représente une vue de côté de la demi-bague de la figure 2 et selon une direction perpendiculaire à la vue de la figure 2
- la figure 3 représente une vue de côté et de l'intérieur d'une seconde demi-bague constituant le collier de la figure 1,
- la figure 4 représente une section selon AA ou BB de la figure 1.

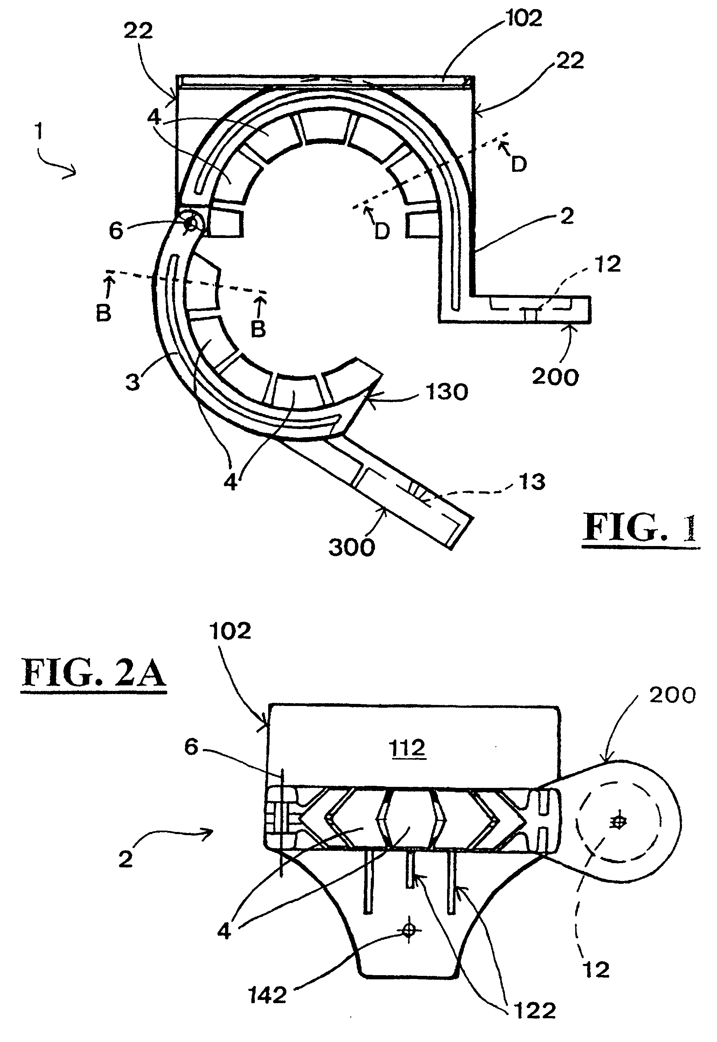

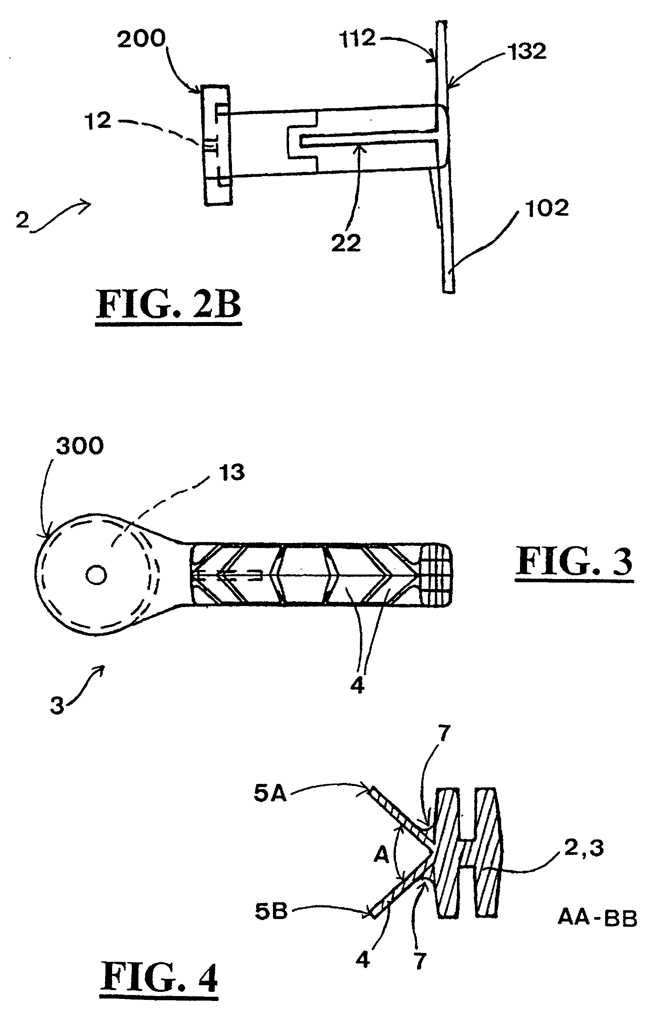

L'invention va à présent être décrite en référence aux figures 1, 2A, 2B, 3 et 4. Le collier (1) antivol pour bouteille selon l'invention est constitué de deux demi-bagues (2, 3) articulées comportant des moyens (12, 13) complémentaires de verrouillage amovible pour assurer le blocage du collier autour du col d'une bouteille. Les deux demi-bagues (2, 3) peuvent être reliées articulées au niveau de l'une de leurs extrémités, autour d'un axe (6) constitué, par exemple, par un rivet bouterollé. La surface intérieure de chacune des demi-bagues (2, 3), c'est-à-dire la surface destinée à venir au contact du col de la bouteille, comporte une pluralité d'ailettes (4). Les ailettes (4) sont déformables pour permettre l'adaptation du collier (1) à des diamètres différents de cols de bouteilles. De manière préférée, mais non limitative, chacune des ailettes (4) est constituée de deux parois planes (5A, 5B) reliées au corps de la demi-bague (2, 3) au niveau de l'un de leurs bords de façon à constituer un dièdre. Un faible espace peut être prévu entre deux ailettes (4) adjacentes pour notamment permettre la déformation de ces dernières lors du serrage du collier autour du col de la bouteille. Par ailleurs, les dimensions des ailettes (4) sont décroissantes radialement en direction de l'axe de symétrie du collier de façon à ménager un espace circulaire au centre du collier dont les dimensions sont légèrement inférieures aux dimensions du col de la bouteille. De cette façon, lorsque le collier est refermé autour du col de la bouteille, les ailettes (4) sont comprimées et se déforment sur le col de la bouteille. Par exemple, pour adapter le collier (1) à des cols de bouteilles de diamètres compris entre 28 et 32 mm, le logement central délimité par les ailettes (4) peut avoir un diamètre égal à 26 mm environ. De manière avantageuse, des nervures de renfort (7) peuvent être prévues au niveau de l'arête du dièdre, pour assurer le lien solide entre les ailettes (4) et le corps de la demi-bague (2, 3) tout en permettant la déformation de ces dernières pour s'adapter au diamètre du col de la bouteille. Les deux faces (5A, 5B) du dièdre constitué par l'ailette (4) sont disposées sensiblement symétriquement par rapport au plan du collier (1). L'angle (A) du dièdre formé par les deux parois (5A, 5B) peut être sensiblement égal à, par exemple, 90 degrés. Dans l'exemple de réalisation de la figure 4, l'angle du dièdre en égal à 85 degrés environ. Bien sûr, dans des variantes de réalisation non représentées, l'angle du dièdre peut être supérieur ou inférieur à 90 degrés. Lors du serrage du collier (1) autour du col de la bouteille, les deux faces (5A, 5B) du dièdre peuvent se déformer de manière élastique en s'écartant l'une de l'autre. Par ailleurs, les ailettes (4) sont disposées pour qu'il n'y ait pas de jour aux extrémités de jonction des deux demi-bagues bagues (2, 3), entre les deux ailettes (4) adjacentes qui appartiennent respectivement aux deux demi-bagues. C'est-à-dire que, lorsque le collier (1) est refermé autour du goulot de la bouteille, il n'y a pas d'espace ou un espace trop faible entre les ailettes (4) des extrémités des demi-bagues (2, 3) pour permettre l'introduction d'un outil pour forcer l'ouverture du collier (1). Le corps de chaque demi-bague (2, 3) peut, par exemple, avoir sensiblement la forme d'un H en coupe transversale. Cette forme confère au collier (1) une grande solidité tout lui assurant une élasticité suffisante pour s'adapter à des diamètres différents de cols de bouteilles. Une première (2) des demi-bagues est pourvue d'une paroi (102) sensiblement plane et tangente au corps de la demi-bague (2). La paroi (102) plane est, par exemple, sensiblement parallèle à l'axe de symétrie du collier. Des nervures (22) de renforcement peuvent être prévues entre la paroi (102) plane et le corps de la demi-bague (2), pour empêcher l'arrachement de la paroi (102) plane. Le collier (1) peut comporter, par exemple, deux nervures (22), situées dans un plan parallèle au plan du collier (1). Les deux nervures (22) sont situées respectivement de part et d'autre de la portion de la paroi (102) qui est tangente à la demi-bague (2). L'extrémité supérieure de la paroi (102) plane fait saillie au-dessus du bord supérieur du collier (1), pour constituer une première surface (112) située en vis-à-vis du col de la bouteille. Cette première (112) surface constitue un support pour, par exemple, une première étiquette adhésive telle qu'une étiquette magnétique détectable à distance. Avantageusement, le collier (1) est conformé de façon à ne laisser qu'un faible espace entre la première surface (112) de la paroi (102) et le col de la bouteille, pour empêcher le décollement de l'étiquette magnétique. La seconde (132) surface de la paroi (102) plane, c'est-à-dire celle qui est orientée vers l'extérieur du collier (1), constitue une surface support pour, par exemple, une seconde étiquette telle qu'une étiquette informative. L'extrémité inférieure de la paroi (102) plane fait saillie au-dessous du bord inférieur du collier (1) et comporte des moyens (142) d'attache d'un dispositif antivol détectable susceptible de déclencher une alarme à distance. Ces moyens (142) d'attache d'un dispositif détectable susceptible de déclencher une alarme à distance peuvent être constitués, par exemple, d'un oeil (142) de fixation. Le dispositif antivol peut être constitué, par exemple, d'une plaque magnétisable. Le collier (1) peut comporter des nervures (122) de renforcement, par exemple trois, formées entre la portion inférieure de la paroi (102) plane et le corps de la demi-bague (2). Comme précédemment, les nervures (122) sont prévues pour empêcher l'arrachement de la paroi (102) plane et donc du dispositif susceptible de déclencher une alarme à distance. L'extrémité libre de la première (2) demi-bague peut avoir la forme d'un L dont le pied (200), qui est orienté sensiblement radialement vers l'extérieur du collier (1), constitue une première languette (200) rigide. L'extrémité libre de la seconde (3) demi-bague peut comporter une portion rectiligne (130) et une languette (300) rigide formant, avec la portion rectiligne (130), un angle en L destiné à venir épouser le coude du L formé à l'extrémité de la première (2) demi-bague. De préférence, la languette (300) rigide de la seconde (3) demi-bague est décalée par rapport au plan de joint avec le corps de la demi-bague (3), c'est-à-dire que la languette (300) rigide est située dans le prolongement d'une corde de l'arc de cercle formé par la demi-bague (3). Cette disposition de la seconde languette (300) rigide limite l'encombrement du collier (1) pour éviter que les bouteilles pourvues de collier ne se gênent lorsque, par exemple, elles sont rangées dans des casiers. Les extrémités des deux demi-bagues (2, 3) sont conformées de façon que, lors de la fermeture du collier (1), les deux languettes (200, 300) rigides soient superposées. Les moyens de verrouillage amovibles assurant le blocage du collier autour du col de la bouteille sont situés sur les languettes (200, 300) rigide. Ainsi, lorsque le collier (1) est verrouillé autour du col de la bouteille, il se trouve bloqué sur le col par la protubérance du goulot qui empêche sa sortie par glissement. Les moyens de verrouillage amovibles assurant la fermeture du collier (1) autour du col de la bouteille peuvent être constitués, par exemple, d'un dispositif du type bouton de sécurité appelé dans le métier "bubble". Celui-ci est formé par un clou introduit dans un premier logement (12) situé sur la languette (200) d'une première (2) demi-bague et dont la pointe, qui peut avoir des crans, coopère avec un bouton de réception creux dont une paroi est percée par un trou pour recevoir la pointe du clou et comportant à l'intérieur des moyens tels que, par exemple, des griffes pour bloquer l'extraction du clou lorsque celui-ci a été introduit dans le trou. Un second logement (13) de la languette (300) de la seconde (3) demi-bague permet d'accueillir ce bouton. Les rebords des deux (12, 13) logements protègent le bouton de sécurité des actions d'outils tranchants ou pénétrant utilisés dans des tentatives d'ouverture. Ces moyens sont agencés de façon à libérer la pointe du clou lorsque l'ensemble clou-bouton est soumis à l'action d'un champ magnétique. Bien entendu, les moyens de verrouillage amovibles assurant la fermeture du collier (1) peuvent être constitués de tout autre dispositif équivalent.

Les deux demi-bagues (2, 3) formant le collier (1) peuvent être constituées de matière plastique moulée ou de tout autre matériau. De préférence, le collier (1) est constitué de polypropylène chargé en polyéthylène ce qui lui confère une grande solidité tout en lui assurant une élasticité suffisante pour s'adapter à des diamètres différents de cols de bouteilles.

Il doit être évident, pour les personnes versées dans l'art, que la présente invention permet des modes de réalisation sous de nombreuses autres formes spécifiques, sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Collier antivol pour bouteille, comportant des moyens complémentaires de verrouillage amovibles pour assurer le blocage du collier autour du col d'une bouteille, **caractérisé en ce qu'**il est constitué de deux demi-bagues articulées sur un même axe (6), l'une (2) au moins des demi-bagues (2, 3) comportant des moyens (102, 142) de fixation d'un dispositif détectable susceptible de déclencher une alarme à distance, la surface intérieure de chacune des demi-bagues comportant une pluralité d'ailettes (4) destinées à venir en contact et se déformer sur le col de la bouteille lors de la fermeture du collier, les ailettes (4) étant déformables de façon à permettre l'adaptation du collier à des diamètres de cols de bouteilles différents.

2. Collier antivol pour bouteille selon la revendication 1, **caractérisé en ce que** chacune des ailettes (4) est constituée de deux portions planes (5A, 5B) reliées au corps de la demi-bague (2, 3) au niveau de l'un de leurs bords de façon à constituer un dièdre, les deux faces (5A, 5B) du dièdre constitué par l'ailette (4) étant disposées sensiblement symétriquement par rapport au plan du collier antivol de façon à former un angle sensiblement droit, les deux faces (5A, 5B) du dièdre s'écartant l'une de l'autre par élasticité lors de la déformation de l'ailette (4) sur le col de la bouteille.

3. Collier antivol pour bouteille selon la revendication 1 ou 2, **caractérisé en ce que** les ailettes (4) sont disposées de façon à ne présenter aucun jour aux extrémités de jonction des deux demi-bagues (2, 3), entre les deux ailettes (4) adjacentes appartenant respectivement aux deux demi-bagues.

4. Collier antivol pour bouteille selon l'une quelconque des revendications 1 à 3, **caractérisé en ce que** le corps de chaque demi-bague (2, 3) a, en coupe transversale, sensiblement la forme d'un H.

5. Collier antivol pour bouteille selon l'une quelconque des revendication 1 à 4, **caractérisé en ce que** l'une (2) des demi-bagues comporte une paroi (102) sensiblement plane tangente au corps de la demi-bague et sensiblement parallèle à l'axe de symétrie du collier, la demi-bague (2) comportant au moins une nervure (22) de renforcement formée entre la paroi (102) plane et le corps de la demi-bague (2), l'extrémité supérieure de la paroi (102) plane faisant saillie au-dessus du bord supérieur du collier pour constituer une première surface (112) située en vis-à-vis du col de la bouteille et formant un support pour une première étiquette adhésive telle qu'une étiquette magnétique détectable à distance, le collier étant conformé de façon à ne laisser qu'un faible espace entre la première surface (112) et le col de la bouteille, pour empêcher le décollement de l'étiquette magnétique, la seconde surface (132) de la paroi (102) plane, orientée vers l'extérieur du collier, constituant une surface support pour une seconde étiquette adhésive telle qu'une étiquette informative.

6. Collier antivol pour bouteille selon la revendication 5, **caractérisé en ce que** l'extrémité inférieure de la paroi (102) plane fait saillie au-dessous du bord inférieur du collier et comporte des moyens (142) d'attache d'un dispositif détectable susceptible de déclencher une alarme à distance, le collier comportant au moins une nervure (122) de renforcement formée entre la portion inférieure de la paroi (102) plane et le corps de la demi-bague (2).

7. Collier antivol pour bouteille selon la revendication 6, **caractérisé en ce que** l'extrémité libre d'une première (2) des demi-bague (2, 3) a sensiblement la forme d'un L dont le pied est orienté sensiblement vers l'extérieur du collier et constitue une languette (200) rigide, l'extrémité libre de la seconde (3) demi-bague comportant une portion rectiligne (130) et une languette (300) rigide formant, avec la portion rectiligne (130), un angle en L destiné à venir épouser le coude du L formé à l'extrémité de la première (2) demi-bague lors de la fermeture du collier, les extrémités des demi-bagues (2, 3) étant conformées de façon que les languettes (200, 300) des deux demi-bagues soient superposées dans la position fermée du collier (1), les languettes (200, 300) des demi-bagues comportant les moyens complémentaires de verrouillage amovibles pour assurer le blocage du collier autour du col de la bouteille.

8. Collier antivol pour bouteille selon la revendication 7, **caractérisé en ce que** la languette (300) rigide de la seconde (3) demi-bague est décalée par rapport au plan de joint avec le corps de la demi-bague (3), c'est-à-dire que la languette (300) rigide est située dans le prolongement d'une corde de l'arc de cercle formé par la demi-bague (3).

9. Collier antivol pour bouteille selon la revendication 7 ou 8, **caractérisé en ce que** les moyens complémentaires de verrouillage amovibles assurant la fermeture du collier autour du col de la bouteille sont constitués d'un dispositif du type bouton de sécurité ou "bubble" formé par un clou introduit dans un premier logement (12) situé sur la languette (200) d'une première (2) demi-bague et dont la pointe coopère avec un bouton de réception creux situé dans un logement (13) de la languette (300) de la seconde demi-bague, le bouton de réception comportant une paroi percée d'un trou pour recevoir la pointe du clou et des moyens de blocage amovibles de l'extraction du clou lorsque ce dernier a été introduit dans le trou.

10. Collier antivol pour bouteille selon l'une quelconque des revendication 1 à 9, **caractérisé en ce que** les deux demi-bagues (2, 3) formant le collier sont constituées de matière plastique moulée telles que du polypropylène chargé en polyéthylène.

11. Collier antivol pour bouteille selon l'une quelconque des revendication 1 à 10, **caractérisé en ce que** les deux demi-bagues (2, 3) sont articulées au niveau de l'une de leurs extrémités autour d'un axe constitué par un rivet bouterollé.

## Claims

1. Antitheft collar for a bottle, comprising complementary removable locking means to ensure that the collar is locked around the neck of a bottle, **characterised in that** it is constituted by two half-rings hinged on the same axis (6), at least one (2) of the half-rings (2, 3) comprising means (102, 142) for fastening a detectable device capable of triggering a remote alarm, the inner surface of each of the half-rings comprising a plurality of fins (4) intended to come into contact with and be deformed on the neck of the bottle when the collar is closed, the fins (4) being deformable so as to allow the collar to adapt to bottle necks of various diameters.

2. Antitheft collar for a bottle according to Claim 1, **characterised in that** each of the fins (4) is constituted by two flat portions (5A, 5B) connected to the body of the half-ring (2, 3) at one of their edges so as to constitute a dihedron, the two faces (5A, 5B) of the dihedron constituted by the fin (4) being arranged substantially symmetrically with respect to the plane of the antitheft collar so as to form substantially a right angle, the two faces (5A, 5B) of the dihedron moving apart through elasticity when the fin (4) is deformed on the bottle neck.

3. Antitheft collar for a bottle according to Claim 1 or 2, **characterised in that** the fins (4) are arranged so as not to have any gap, at the joining ends of the two half-rings (2, 3), between the two adjacent fins (4) belonging respectively to the two half-rings.

4. Antitheft collar for a bottle according to any one of Claims 1 to 3, **characterised in that** the body of each half-ring (2, 3) is substantially H-shaped in cross section.

5. Antitheft collar for a bottle according to any one of Claims 1 to 4, **characterised in that** one (2) of the half-rings comprises a substantially flat wall (102) tangent to the body of the half-ring and substantially parallel to the axis of symmetry of the collar, the half-ring (2) comprising at least one reinforcing rib (22) formed between the flat wall (102) and the body of the half-ring (2), the upper end of the flat wall (102) projecting above the upper edge of the collar so as to constitute a first surface (112) located facing the bottle neck and forming a support for a first adhesive label such as a remotely detectable magnetic label, the collar being shaped so as to leave only a little space between the first surface (112) and the bottle neck, in order to prevent the detachment of the magnetic label, the second surface (132) of the flat wall (102), oriented towards the outside of the collar, constituting a support surface for a second adhesive label such as an information label.

6. Antitheft collar for a bottle according to Claim 5, **characterised in that** the lower end of the flat wall (102) projects below the lower edge of the collar and comprises means (142) for attaching a detectable device capable of triggering a remote alarm, the collar comprising at least one reinforcing rib (122) formed between the lower portion of the flat wall (102) and the body of the half-ring (2).

7. Antitheft collar for a bottle according to Claim 6, **characterised in that** the free end of a first (2) one of the half-rings (2, 3) has substantially the shape of an L, the foot of which is oriented substantially towards the outside of the collar and constitutes a rigid tab (200), the free end of the second half-ring (3) comprising a rectilinear portion (130) and a rigid tab (300) forming, together with the rectilinear portion (130), an L-shaped angle intended to fit against the elbow of the L formed at the end of the first (2) half-ring when the collar is closed, the ends of the half-rings (2, 3) being shaped so that the tabs (200, 300) of the two half-rings are superimposed in the closed position of the collar (1), the tabs (200, 300) of the half-rings comprising the complementary removable locking means to ensure that the collar is locked around the bottle neck.

8. Antitheft collar for a bottle according to Claim 7, **characterised in that** the rigid tab (300) of the second (3) half-ring is offset relative to the plane of the joint with the body of the half-ring (3), i.e. that the rigid tab (300) is located in the extension of a chord of the arc of a circle formed by the half-ring (3).

9. Antitheft collar for a bottle according to Claim 7 or 8, **characterised in that** the complementary removable locking means ensuring that the collar is closed around the bottle neck are constituted by a device of the security button or "bubble" type formed by a stud introduced into a first compartment (12) located on the tab (200) of a first (2) half-ring and the tip of which co-operates with a hollow reception button located in a compartment (13) of the tab (300) of the second half-ring, the reception button comprising a wall pierced by a hole in order to receive the tip of the stud and removable means for locking the extraction of the stud when the latter has been introduced into the hole.

10. Antitheft collar for a bottle according to any one of Claims 1 to 9, **characterised in that** the two half-rings (2, 3) forming the collar are constituted by moulded plastic material such as polyethylene-coated polypropylene.

11. Antitheft collar for a bottle according to any one of Claims 1 to 10, **characterised in that** the two half-rings (2, 3) are hinged at one of their ends about an axis constituted by a snapped rivet.

## Patentansprüche

1. Diebstahlssicherungsring für eine Flasche mit lösbaren komplementären Verriegelungsmitteln, um die Blockierung des Rings um den Hals einer Flasche zu gewährleisten, **dadurch gekennzeichnet, daß** er aus zwei Halbringen besteht, die auf ein und derselben Achse (6) angelenkt sind, wobei zumindest einer (2) der Halbringe (2, 3) Mittel (102, 142) zur Befestigung einer erfaßbaren Vorrichtung aufweist, die einen Fernalarm auslösen kann, wobei die Innenfläche von jedem der Halbringe eine Vielzahl von Flügeln (4) aufweist, die beim Schließen des Rings mit dem Hals der Flasche in Kontakt kommen und sich verformen sollen, wobei die Flügel (4) so verformbar sind, daß sie die Anpassung des Rings an Durchmesser von verschiedenen Flaschenhälsen zu ermöglichen.

2. Diebstahlssicherungsring für eine Flasche nach Anspruch 1, **dadurch gekennzeichnet, daß** jeder der Flügel (4) aus zwei ebenen Teilen (5A, 5B) besteht, die mit dem Körper des Halbrings (2, 3) auf der Höhe von einem ihrer Ränder verbunden sind, um ein Dieder zu bilden, wobei die beiden Flächen (5A, 5B) des Dieders, das vom Flügel (4) gebildet wird, im wesentlichen symmetrisch bezüglich der Ebene des Diebstahlssicherungsrings angeordnet sind, um einen im wesentlichen rechten Winkel zu bilden, wobei sich die zwei Flächen (5A, 5B) des Diederss durch Elastizität bei der Verformung des Flügels (4) am Hals der Flasche voneinander entfernen.

3. Diebstahlssicherungsring für eine Flasche nach Anspruch 1 oder 2, **dadurch gekennzeichnet, daß** die Flügel (4) so angeordnet sind, daß sie an den Verbindungsenden der zwei Halbringe (2, 3) zwischen den zwei benachbarten Flügeln (4), die jeweils zu den zwei Halbringen gehören, keine Öffnung aufweisen.

4. Diebstahlssicherungsring für eine Flasche nach einem der Ansprüche 1 bis 3, **dadurch gekennzeichnet, daß** der Körper jedes Halbrings (2, 3) im Querschnitt im wesentlichen die Form eines H aufweist.

5. Diebstahlssicherungsring für eine Flasche nach einem der Ansprüche 1 bis 4, **dadurch gekennzeichnet, daß** einer (2) der Halbringe eine im wesentlichen ebene Wand (102) aufweist, die zum Köper des Halbrings tangential ist und zur Symmetrieachse des Rings im wesentlichen parallel ist, wobei der Halbring (2) mindestens eine Verstärkungsrippe (22) aufweist, die zwischen der ebenen Wand (102) und dem Körper des Halbrings (2) ausgebildet ist, wobei das obere Ende der ebenen Wand (102) oberhalb des oberen Rands des Rings hervorsteht, um eine erste Oberfläche (112) zu bilden, die gegenüber dem Hals der Flasche liegt und einen Träger für ein erstes Klebeetikett wie ein aus der Entfernung erfaßbares Magnetetikett bildet, wobei der Ring so ausgebildet ist, daß er nur einen geringen Raum zwischen der ersten Oberfläche (112) und dem Hals der Flasche läßt, um das Ablösen des Magnetetiketts zu verhindern, wobei die zweite Oberfläche (132) der ebenen Wand (102), die zum Äußeren des Rings orientiert ist, eine Trägerfläche für ein zweites Klebeetikett wie ein Informationsetikett bildet.

6. Diebstahlssicherungsring für eine Flasche nach Anspruch 5, **dadurch gekennzeichnet, daß** das untere Ende der ebenen Wand (102) unterhalb des unteren Randes des Rings hervorsteht und Mittel (142) zur Befestigung einer erfaßbaren Vorrichtung aufweist, die einen Fernalarm auslösen kann, wobei der Ring mindestens eine Verstärkungsrippe (122) aufweist, die zwischen dem unteren Teil der ebenen Wand (102) und dem Körper des Halbrings (2) ausgebildet ist.

7. Diebstahlssicherungsring für eine Flasche nach Anspruch 6, **dadurch gekennzeichnet, daß** das freie Ende eines ersten (2) der Halbringe (2, 3) im wesentlichen die Form eines L aufweist, dessen Fuß im wesentlichen zum Äußeren des Rings orientiert ist und eine starre Zunge (200) bildet, wobei das freie Ende des zweiten Halbrings (3) einen geradlinigen Teil (130) und eine starre Zunge (300) aufweist, die mit dem geradlinigen Teil (130) einen L-förmigen Winkel bildet, der sich beim Schließen des Rings an die Biegung des L anschmiegen soll, das am Ende des ersten Halbrings (2) gebildet ist, wobei die Enden der Halbringe (2, 3) so ausgebildet sind, daß die Zungen (200, 300) der zwei Halbringe in der geschlossenen Position des Rings (1) übereinander gelegt sind, wobei die Zungen (200, 300) der Halbringe die lösbaren komplementären Verriegelungsmittel aufweisen, um die Blockierung des Rings um den Hals der Flasche zu gewährleisten.

8. Diebstahlssicherungsring für eine Flasche nach Anspruch 7, **dadurch gekennzeichnet, daß** die starre Zunge (300) des zweiten Halbrings (3) bezüglich der Ebene der Verbindungsstelle mit dem Körper des Halbrings (3) versetzt ist, das heißt, daß die starre Zunge (300) in der Verlängerung einer Sehne des Kreisbogens, der vom Halbring (3) gebildet wird, liegt.

9. Diebstahlssicherungsring für eine Flasche nach Anspruch 7 oder 8, **dadurch gekennzeichnet, daß** die lösbaren komplementären Verriegelungsmittel, die das Schließen des Rings um den Hals der Flasche gewährleisten, aus einer Vorrichtung des Typs Sicherheitsknopf oder "Blase" bestehen, die durch einen Nagel gebildet ist, der in eine erste Aufnahme (12) eingesetzt wird, die an der Zunge (200) eines ersten Halbrings (2) angeordnet ist, und dessen Spitze mit einem hohlen Aufnahmeknopf zusammenwirkt, der sich in einer Aufnahme (13) der Zunge (300) des zweiten Halbrings befindet, wobei der Aufnahmeknopf eine mit einem Loch versehene Wand, um die Spitze des Nagels aufzunehmen, und lösbare Mittel zum Blockieren des Herausziehens des Nagels, wenn dieser letztere in das Loch eingesetzt wurde, aufweist.

10. Diebstahlssicherungsring für eine Flasche nach einem der Ansprüche 1 bis 9, **dadurch gekennzeichnet, daß** die zwei Halbringe (2, 3), die den Ring bilden, aus einem geformten Kunststoffmaterial wie Polypropylen mit einem Anteil an Polyethylen bestehen.

11. Diebstahlssicherungsring für eine Flasche nach einem der Ansprüche 1 bis 10, **dadurch gekennzeichnet, daß** die zwei Halbringe (2, 3) auf der Höhe von einem ihrer Enden um eine Achse angelenkt sind, die aus einem geschellten Niet besteht.
